## Europäisches Patentamt

(19) **European Patent Office**

**Office européen des brevets**

(11) Publication number: **0 219 469**
**B1**

(12) **EUROPEAN PATENT SPECIFICATION**

(45) Date of publication of patent specification: **09.01.91**

(51) Int. Cl.⁵: **B 60 P 3/00, A 62 C 27/00**

(21) Application number: **86830289.4**

(22) Date of filing: **08.10.86**

(54) A first-intervention mobile unit for contaminated areas.

(30) Priority: **10.10.85 IT 3623985 u**

(43) Date of publication of application:
**22.04.87 Bulletin 87/17**

(45) Publication of the grant of the patent:
**09.01.91 Bulletin 91/02**

(84) Designated Contracting States:
**BE CH DE ES FR GB LI NL SE**

(56) References cited:
**BE-A- 787 547**
**CH-A- 448 770**
**DE-A-1 729 886**
**FR-A-1 345 927**
**US-A-3 256 440**
**US-A-3 567 273**
**US-A-3 672 466**

(73) Proprietor: **Comitato Nazionale per la Ricerca e per lo Sviluppo dell'Energia Nucleare e delle Energie Alternative**
**Viale Regina Margherita 125**
**I-00198 Roma (IT)**

(72) Inventor: **Galvan, Dino**
**24 Via Spinoza**
**I-00137 Roma RM (IT)**
Inventor: **Marcoaldi, G. Franco**
**164 Via Principe di Napoli**
**I-00062 Bracciano RM (IT)**
Inventor: **Bazzan, Antonio**
**31 Viale Belloni**
**I-00061 Anguillara Sabazia RM (IT)**

(74) Representative: **Tonon, Gilberto et al**
**c/o Società Italiana Brevetti S.p.A. Piazza di Pietra, 39**
**I-00186 Roma (IT)**

Courier Press, Leamington Spa, England.

## Description

Disclosure

A mobile unit installed on an industrial vehicle with a suitable trailer, entirely self-contained, is provided with a set of instruments and apparatus which allow intervention in an area essentially affected by contamination with toxic and/or radioactive substances and involved in a recent disaster situation which has as a consequence the impracticability of the area itself using normal means of protection, and which is not provided with pre-existing structures for emergency interventions. The unit entails the employment preferably of at least three operators, one of whom in its interior for the controls of the apparatus and of the instruments and two of whom on the exterior connected to the apparatus for the basic functions such as breathing, communications and measurements.

In the event of a disaster having as main effect the spreading in the surrounding environment, either closed or open, of radioactive, or other, contamination, also in the presence of a risk of external irradiation, the control and reclamation intervention is developed in three subsequent steps.

The first step is that immediately subsequent to the disaster and has as its main aims:

the rescue of eventual operators involved;

the intervention on equipment present in the area of the disaster, the presence of which may increase the risks;

an initial visual survey of the situation.

The intervention may be performed, usually, either by the same personnel operating in the area, or by immediate intervention personnel at the plant or enterprise.

The means may be that available on the spot, i.e. protective suits, masks, self-contained breathing apparatus with limited autonomy of operation.

The second step is that subsequent to the first intervention step, and the problems involved, besides that of protection from radioactivity, may also comprise conventional problems (for instance the tipping over of tanker vehicles, escape of toxic clouds, leakage of toxic substances in tanks, sewers, etc.).

The aims in this step are the following;

to check and render safe all the parts of the plant which may be either involved or damaged;

The removal of the causes of contamination if the contamination is still proceeding (an accident with a non instantaneous process);

the shielding of possible external irradiation sources;

a complete contamination survey and possibly a survey of external irradiation;

the transmission, by means of television cameras of the visible situation and, at the same time, the recording on a video tape recorder;

the first decontamination or containment operations directed to create access areas for the subsequent interventions.

In this second step the intervention of skilled personnel is organised, with specialised protection equipment i. e. suits for long term total protection, transparent plastic hermetic suits (with air circulation derived either from cylinders or from a compressor unit), being light and resistant to tear, chemical attack, communication means between the intervention operators and the supervision operators.

This sophisticated and complex equipment may be exceptionally available on the spot, in the case of modern high-risk plants.

Said equipment is generally assembled, transported and set up in the vicinity of the affected area by specialised organisations, since the coordination of various authorities is sometimes required.

The range of apparatus presently available on the market is generally transportable only with difficulty and above all it is difficult, in an emergency situation, to collect the mutually compatible and connectable components.

The third phase starts when knowledge of the disaster and its consequences is complete and is directed towards:

either the removal or neutralisation of the contaminating agent;

the restoration of the conditions existing prior to the disaster in the interior of the plant or alternatively the demolition of the plant and the conditioning of all the contaminated components;

the restoration of the original environmental conditions in the area surrounding the plant, eventually affected by the contamination.

In this step the operations are performed by specialised personnel equipped and provided with garments and means suited to the characteristics of the agent to be removed and to the environment to be reclaimed.

When considering carefully the three steps above mentioned, the following considerations become clear.

The means available at present do not allow, normally, the performance, under conditions of safety and reliability, of complex and resolving interventions because:

a lack of availability or access to the intervention apparatus existing in the plant may occur; this occurs, for instance, when the negative event evolves very rapidly involving large areas of the plant itself including the area where such apparatus are located; the intervention is performed with the human operators left to their own devices, due to the lack of a continuous and direct connection, both effective and informative, between the organisers of the intervention and those performing it; it is practically impossible to transfer devices and apparatus, in particular for ventilation, breathing and physical protection, into an area already compromised by the accidental event and then to utilise such apparatus with the guarantee of complete protection required by the event; an external technical support is not guaranteed for any new problem which may arise because, in the absence of a direct and continuous connection, the exact terms of the problem will only be known generally at the end of the intervention; the final decontamination of the operators, who have used the conventional protection means, may be particularly difficult since, very often, suitable systems are not available.

Some means are also known, which however do not solve the problems in question. For instance FR-A-1345927 merely discloses a sanitary mobile unit intended for isolating and decontaminating astronauts after landing or contaminated persons, such a unit comprising a first zone of decontamination, connected with the external environment through a ramp, and a set of decontaminating rooms, as well as several devices such as radioactivity detectors, cylinders of air, control panels, and interphone means. A motor-van is also known (CH-A-448770), provided with several means for telecommunication, radiation measurements, illumination, protection, interventions and so on, all these functions being performed or controlled in the motor-van itself and without possibility of intervention of external operators, with consequent evident operative limitations. US-A-3567273 discloses a vehicle for operating in contamination areas, comprising multisectional vehicle bodies provided with radio communication means, measuring means for the level of radiation, cleaning means for persons and objects, water tank means, pump means and hoses for road and surface decontamination after radioactive precipitation and for firefighting action. None of these known systems is apt to solve the problems of autonomous effective interventions and with operators working directly on the ground, in areas involved in a disaster situation with contamination.

The aim of the present invention is to provide a mobile operative unit which, independently of the environmental situation developed following an accident, autonomously allows effective interventions without having to recur to the means eventually existing in the plant which may have become inaccessible and which in most cases are entirely insufficient.

The main characteristic of the present invention consists in a mobile unit connected with external operators (provided with garments and means apt to preserve them from contamination of the environment) and to perform checks, measurements and rescue operations) through hoses which feed air to said operators for breathing and moreover contain telecommunication cables for vocal connection of said external operators with an operator within said motor-van, so as to ensure the basic functions for the operator, such as breathing, communication and measurement and so as to allow the best, immediate and complete intervention over an area involved in an accident with contamination.

The mobile unit in question realises a complete and continuous connection between the unit itself and the operators, supporting them with breathable fresh air, radio telecommunications, and so on.

These services may be continuously optimised according to the needs of the operators.

The unit in question, being completely self-contained and conveniently structured, may provide the above mentioned support even in conditions of submersion. It can operate in a contaminated environment even if submersed by a toxic and/or radioactive cloud.

Even when in continuous vocal connection with the operators, the unit may be connected at the same time by a radio link to external units (for instance governmental authorities) which may follow the operation in real time.

At the end of the intervention, both the operators and the unit itself may be easily decontaminated on the spot making it possible to effect new interventions within a short time.

The mobile unit according to the present invention has, therefore, as a main purpose that of allowing an immediate, complete and effective intervention over an area involved in an accident with contamination.

It allows a "first-aid" intervention, with adequate means and equipment already interconnected, in any area of the territory.

The present invention will be better illustrated hereinafter with the disclosure of a non limitative example of an embodiment thereof, with reference to the attached figures, wherein:

figure 1 is a view of the mobile unit ready for the intervention phase;

figure 2 is a view of the mobile unit of figure 1, in open arrangement for a better clarity of illustration;

figure 3 is a first view of the interior of the motor-van of the mobile unit of figure 1; and figure 4 is a second view of the interior of the motor-van of the mobile unit of figure 1.

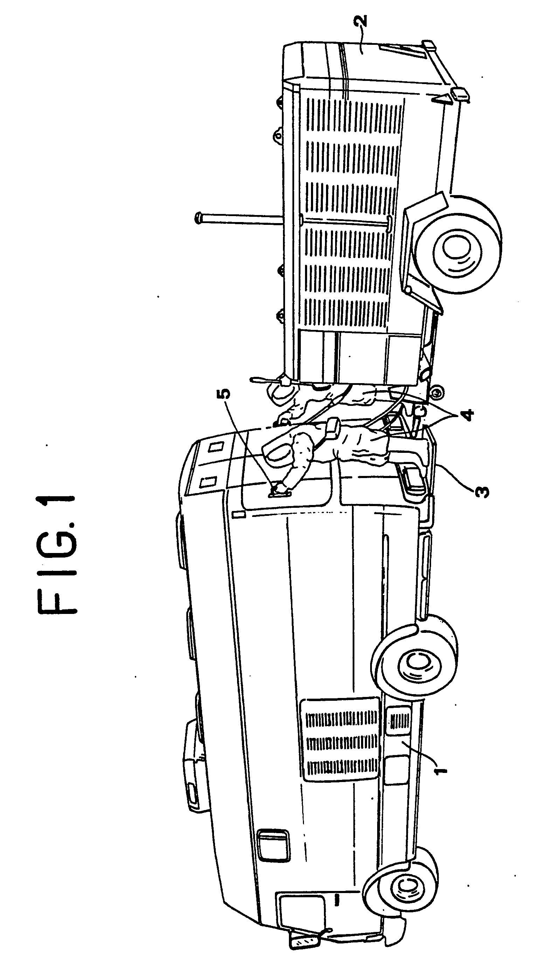

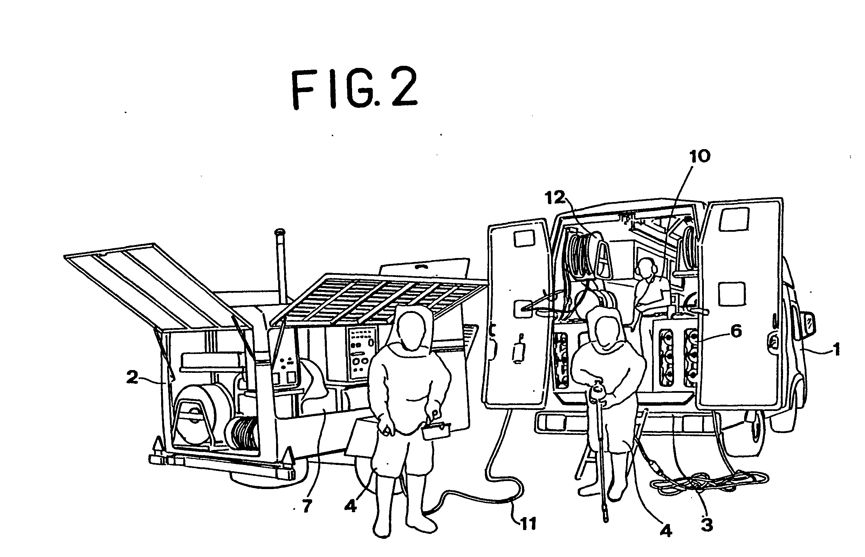

With reference to the above figures, it may be noted from figures 1 and 2 that the mobile unit of the present invention includes a motor-van 1 with a cabin and a towed vehicle 2 provided with a fairing.

The motor-van 1, with air-tight structure and provided with filters (not shown) in correspondence to any opening, is provided with rear footboards 3 arranged to be occupied by at least two external operators 4 who, during the transportation, grasp suitable handles 5.

In the motor-van 1 and in the towed vehicle 2 apparatus and devices are installed, which are necessary for the foreseen prompt intervention and reclamation operation previously discussed.

It should be remarked that each external operator 4 wears, starting from the inside and working out, the following outfit: a plastic jacket with a connection for the supply of air; a device for the adjustment of the cooling of the delivered fluid; small plastic tubes for the distribution of air to the arms, legs and head; an exit pipe for the hot air caused by sweating (the internal ventilation allows an effective delivery of breathable air and allows the disposal of $CO_2$, of moisture and of the metabolic heat); elastic band laringophone, for communication with the command post located in the interior of the van, a reduced dimension acoustic receiver, located in a front pocket of the jacket; a safety half-mask with universal filter; light plastic suits, with a transparent helmet, resistant to shear and to chemical attack; gloves and boots made of an easily decontaminable material.

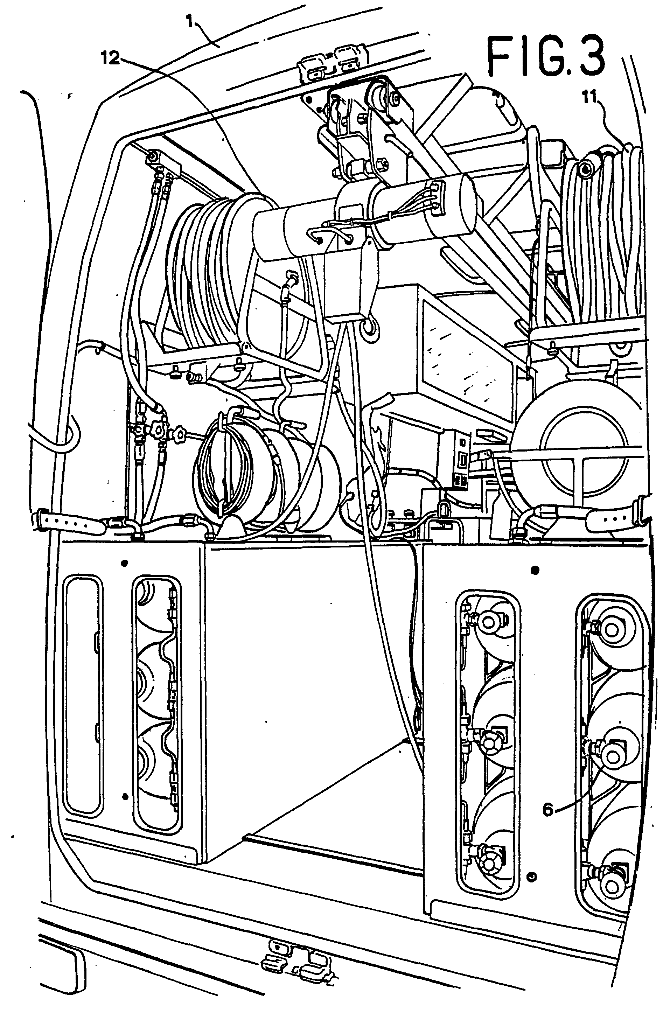

The delivery of air to said operators in the operative phase is performed by means of one or other of two independent supply units, i.e. a unit comprising four racks each containing three cylinders 6 of therapeutic air (see figure 3) located in the interior of the van 1 which deliver breathable fresh air; the autonomy, in the worst conditions, is of about 70 minutes for two operators, the cylinders 6 are connected to an acoustic alarm triggered off when the remaining autonomy is of about 15 minutes, the internal pressure is of about 200 bar which are reduced to about 4 bar at the outlet; a compressor unit 7 (see figure 2) in the towed vehicle 2 which also delivers breathable fresh air. The compressor 7 is provided with a cooling reservoir, an extension tape (75 metres long) for the connection between towed vehicle and motor-van, housing for an electric power generator, panels for safety and the read-out of the operation parameters.

It is also provided with two diesel engines which may be operated alternately (one of them in standby) or at the same time. A system of valves which automatically adjust the operation is provided.

The compressor 7 is of the dry-operating type, and this feature is extremely important because it avoids the build-up of oil vapours common to other kinds of commercially available compressors.

The start-up, shut-down, and control of the engines may be performed directly on the towed vehicle or from the interior of the motor-van, even when running.

The intake of external air into the compressor unit 7, which then delivers it under programmed pressure and temperature, is performed through absolute filters.

The autonomy is practically unlimited.

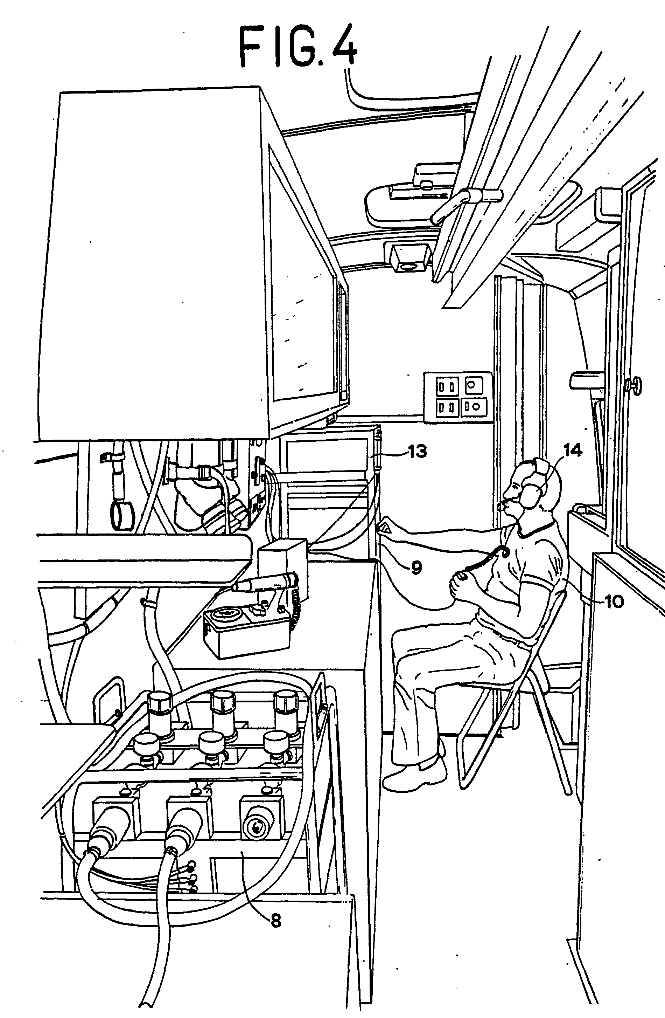

The supply of air is performed through a distributor 8 (see figure 4) located in the interior of the motor-van 1 which performs the following tasks: it receives air, independently from the supply origin, under a reduced pressure compatible with the utilisation of the intervention equipment; it filters further, for each outlet, the air received both as concerns powders, vapours and smells, it regulates and adjusts the flow rate and sends it to the operators; it has the capability of modulating the pressure of the air to be delivered to the single users, according to the operative needs and anyhow within the foreseen and suitably established pressure range.

The control of the air flow, coming either from the cylinders 6 of therapeutic air or from the compressor unit, to be sent to the distributor 8 is assured by a control panel 9 (figure 4) located in the interior of the motor-van 1, operated by an internal operator 10, the function of which is to signal acoustically and optically the malfunctioning of one or the other unit, then automatically connecting the second alternative supply system when the outlet pressure is under 0.5 bar.

The connection between the distributor 9 and the external operators 4 for the supply of air is effected by means of respective flexible pipes 11 wound on metal drums 12 (see figure 4). At the interior of each pipe 11 a telecommunication cable (not shown) is located. The pipes 11 and the respective connections are made of a perfectly decontaminable material, resistant to shear, chemical attack, etc. The length of each pipe is of 75 metres, but 100 metres long pipes may also be used.

Above the control panel 9, a telecommunication console 13 is located (see figure 4), which allows a continuous remote radio connection between the operator 10 in the interior and the external operators 4. The internal operator 10 may alternately and singly communicate with the external operators 4 by activating a microphone with an on-off push-button and using a receiving headphone 14.

The internal operator 10, however, is always listening by means of a loudspeaker which receives continuously the joint communications of the operators.

The supply of the console 13 is assured by an electric power generator unit provided with standby accumulator, to which reference will be made below, or from the accumulators of the motor-vehicle, or from a connection to external mains.

With the aim of full operative autonomy and of an appreciable intervention efficiency of the mobile unit of the present invention, the following additional devices are provided either operative or as a reserve.

An external electric power generator unit mounted on the motor-van 1 in a suitably sound insulated compartment. It is also possible to mount said electric power generator unit on the towed vehicle 2, also associated to a suitable compartment and suitable electric connections. Said electric power generator unit may be operated from the interior of the motor-van 1 in whatever position it be located.

Reserve electric accumulators located in a suitable compartment in the motor-van 1 which provide the electric lighting of the internal compartments and the supply of the pump of the reservoir of the internal lavatory.

Accumulators for internal and external users respectively located in the telecommunication console 13 and in the control panel 9. Each of said accumulators has its own recharge device which may operate either with said electric power generator unit or with the external mains connection.

They start up automatically when it is necessary.

The autonomy is of about 24 hours.

The accumulator located in the control panel 9 provides, besides the supply of the panel 9 itself, also the start-up and shut-down of the compressor unit 7 and of the electric power generator unit and also the internal lighting of the van.

The other accumulator has the purpose of supplying power to the telecommunication console 13.

A water unit for washing and decontamination which performs the important task of washing and decontaminating the operators wearing the complete protective garments and also, when necessary, the mobile unit itself.

The possibility of performing a wet garment unclothing of the operators is basically important because it avoids the contamination caused by lifting which usually occurs in the "dry" operations.

The unit in question, located in a lateral compartment of the van, is connected to a reservoir of about 200 litres containing a decontaminating solution.

The delivery is effected through an adjustable spray gun, provided with several nozzles, connected through a 20 metres long hose wound onto a drum, to a pump powered by a gasoline motor. With this unit it is possible, besides the decontamination of the operators, to wash and decontaminate the van 1 itself and the relative towed vehicle 2. The motor-van 1 is provided with suitable chemical tanks and containers for the collection of the washing liquid.

An external searchlight, entirely similar to those available to fire fighting departments is located in the front part of the motor-van 1 in order to permit operation even by night.

An air conditioning apparatus provided with absolute filters for the air conditioning of the interior of the motor-van 1 with the immission of air from outside through absolute filters constructed to cope with submersion situations.

Self-contained breathing apparatus which may be used in special situations in the operation area and in case of internal emergencies within the unit itself.

A radio apparatus for communicating with the operation base which allows a continuous connection to the exterior of the operation area for an effective and coordinated action in agreement with the competent technical authorities.

A closed circuit television associated to video recorder, operating by means of television cameras included in the equipment of the operators (front band), which allows visualisation of the environment in which the intervention is being made even in the absence of lighting. The images arrive at a receiving monitor with video recorder, allowing an effective programming of the subsequent interventions.

Central instrumentation and protective equipment

Since the problems are extremely wide and differing (radioactive substances, toxic substances, fumes and acid vapours, powders, chemical compounds of several kinds, etc.) an extremely large range of instruments would be necessary. It is however alternatively sufficient to have available instruments for direct radio metric checks (immediate surveys) and samplers of different kinds for short term evaluations (air, powders, aerosols, liquids, etc.).

The protective equipment which may be used is essentially constituted by Pb jackets and gloves, X-ray protection spectacles, movable shields, etc.

## Claims

1. A first intervention mobile unit for contaminated areas including a gas-tight closed motor-van (1) with filters in correspondence with the apertures thereof, provided with foot-boards (3) and grasping handles (5) for the transportation of one or more external operators (4), and a towed vehicle (2) wherein a compressor unit (7) is mounted with external air inlet provided with filters, said motor-van (1) containing a control panel (9) and cylinders (6) of therapeutic air, said mobile unit being characterised in that it comprises a distribution unit (8) within said motor-van (1) for the controlled delivery to said external operators (4) of breathing air, means on said control panel for the automatic and manual control by an internal operator (10) of the air flow, derived from said cylinders (6) or from said compressor unit (7), to be sent to said distribution unit (8) and for signalling possible malfunctioning, drums (12) within said motor-van whereon respective hoses (11) are wound which connect each of said external operators (4) to said distribution unit (8), each of said hoses containing a telecommunication cable for the vocal connection of said external operators (4) with said internal operator (10).

2. A mobile unit according to claim 1 further comprising an electric power generator located in a suitable compartment in said motor-van or in said towed vehicle and operable from the interior of said van independent of its location.

3. A mobile unit according to claims 1 and 2, further including reserve electric accumulators located in a suitable compartment of said motor-van.

4. A mobile unit according to any of the claims 1 to 3, further comprising at least two electric accumulators for internal and external users, one of which located in said control panel for the power supply of the same, for the start-up and shut-down of said compressor unit and said electric power generator unit and for the internal lighting of said motor-van, and the other located in said telecommunication console for its power supply.

5. A mobile unit according to any of the preceding claims further comprising a water unit for washing and decontamination suitable for washing and decontaminating said external operators with the complete protective equipment and, when necessary, said motor-van and the related towed vehicle.

6. A mobile unit according to any of the preceding claims further including an external searchlight of a conventional type located, preferably, in the front part of said motor-van.

7. A mobile unit according to any of the preceding claims further including an air conditioning apparatus for the air conditioning of said motor-van with the immission of air from the exterior through suitable absolute filters.

8. A mobile unit according to any of the preceding claims, further including reserve self-contained breathing apparatus.

9. A mobile unit according to any of the preceding claims further comprising a radio set for the connection with an operative room.

10. A mobile unit according to any of the preceding claims, further including a closed circuit television system provided with video recorder, operating through television cameras included in the equipment of said external operators, which allows visualisation of the environment in which the intervention is made even in the absence of light with the images which arrive at a receiving monitor associated to a video recorder.

11. A mobile unit according to any of the preceding claims further including instruments for direct radiometric checks and samples of different kinds for short term evaluations.

## Patentansprüche

1. Eine mobile Einheit für erste Intervention in verseuchten Gebieten, welche einen gasdicht verschlossenen Lieferwagen (1) mit Filtern die dessen Öffnungen entsprechen umfasst, versehen mit Trittbrettern (3) und Handgriffen (5) für den Transport von einem oder mehreren Aussenangestellten (4) und einen Anhänger (2) in welchem ein Kompressoraggregat (7) mit Filtern für den Einlass der Aussenluft eingebaut ist, wobei dieser Lieferwagen (1) ein Kontrollbrett (9) und Behälter (6) mit therapeutischer Luft besitzt, und diese mobile Einheit dadurch gekennzeichnet ist, dass sie eine Verteilungsanlage (8) in besagtem Lieferwagen (1) besitzt für die regulierte Zuführung von Atemluft zu den Aussenangestellten (4), das Kontrollbrett Vorrichtungen für die automatische und manuelle Bedienung bei einem Innenangestellten (10) besitzt, für die Weiterleitung des Luftzuflusses von den Behältern (6) oder von dem Kompressoraggregat (7) zu der Verteilungsanlage (8), sowie auch für die Anzeigung von möglichen Funktionsstörungen, der Lieferwagen mit Trommel (12) versehen ist, um die sich Schläuche (11) winden, welche jeden der Aussenangestellten (4) mit der Verteilungsanlage (8) verbinden, wobei jeder dieser Schläuche ein Fernmeldekabel enthält für die mündliche Verbindung der Aussenangestellten (4) mit dem Innenangestellten (10).

2. Eine mobile Einheit gemäss Anspruch 1, ferner einen elektrischen Stromerzeuger umfassend, welcher sich an einem hierfür geeigneten Platz im Lieferwagen oder Anhänger befindet, bedienbar vom Inneren des Lieferwagens, unabhängig von dessem Standort.

3. Eine mobile Einheit gemäss den Ansprüchen 1 und 2, ferner elektrische Reserveakkumulatoren umfassend, welche sich an einem dafür geeigneten Platz im Lieferwagen befinden.

4. Eine mobile Einheit gemäss einem der vorhergehenden Ansprüche 1 bis 3, ferner mindestens zwei elektrische Akkumulatoren für Innen- und Aussengebrauch umfassend, einer von denen im Kontrollbrett angebracht ist für die Stromversorgung des Kontrollbrettes, für die Ein- und Abschaltung des Kompressoraggregats und des elektrischen Stromerzeugers, sowie für die Innenbeleuchtung des Lieferwagens, und der andere in der Fernmeldekonsole angebracht ist, um diese mit Strom zu versorgen.

5. Eine mobile Einheit gemäss einem der vorhergehenden Ansprüche, ferner eine Wasseranlage umfassend zum Waschen und zur Entseuchung der Aussenangestellten, deren vollständiger Schutzausrüstung und, falls notwendig, auch des Lieferwagens und des Anhängers.

6. Eine mobile Einheit gemäss einem der vorhergehenden Ansprüche, ferner einen Aussenscheinwerfer von gewöhnlicher Art umfassend, welcher vorzugsweise an der Vorderseite des Lieferwagens angebracht ist.

7. Eine mobile Einheit gemäss einem der vorhergehenden Ansprüche, ferner eine Klimaanlage für das Innere des Lieferwagens umfassend, mit Zufuhr der Aussenluft durch angemessene, absolute Filter.

8. Eine mobile Einheit gemäss einem der vorhergehenden Ansprüche, ferner Reserve-Selbstatmungsgeräte umfassend.

9. Eine mobile Einheit gemäss einem der vorhergehenden Ansprüche, ferner eine Radioanlage für die Verbindung mit einer operativen Zentrale umfassend.

10. Eine mobile Einheit gemäss einem der vorhergehenden Ansprüche, ferner eine Betriebsfernsehanlage mit Videoaufnahmegerät umfassend, welche durch in der Ausrüstung der Aussenangestellten einbegriffene Fernsehkameras funktioniert, und den Blick auf die Umgebung, in welcher die Intervention stattfindet, auch in der Abwesenheit von Licht, erlaubt, durch Bildaufnahmen, welche bei einem mit einem Videoaufnahmegerät verbundenen Empfangsmonitor ankommen.

11. Eine mobile Einheit gemäss einem der vorhergehenden Ansprüche, ferner Instrumente für direkte Strahlungsmesskontrollen und Probenentnehmer verschiedener Art für kurzfristige Bewertungen umfassend.

## Revendications

1. Unité mobile de première intervention destinée à des zones contaminées, comprenant un camion automobile (1) fermé de manière étanche aux gaz, muni de filtres disposés en correspondance avec les ouvertures pratiquées dans le camion, équipé de marche-pieds (3) et de poignées de préhension (5) destinées au transport d'un ou de plusieurs opérateurs externes (4), et une remorque (2) dans laquelle est montée une unité de compresseur (7) équipée d'admissions d'air externe munies de filtres, le camion automobile (1) contenant un tableau de commande (9), ainsi que des bouteilles (6) d'air thérapeutique, l'unité mobile étant caractérisée en ce qu'elle comprend: une unité de distribution (8) au sein du camion automobile (1), destinée à l'alimentation contrôlée d'air de respiration aux opérateurs externes (4); un moyen disposé sur le tableau de commande permettant à un opérateur interne (10) de commander automatiquement ou/et manuellement l'écoulement d'air provenant des bouteilles (6) ou de l'unité de compresseur (7) pour l'envoyer à l'unité de distribution (8), ce moyen étant également destiné à signaler un mauvais fonctionnement éventuel; des dévidoirs (12) disposés au sein du camion automobile, sur lesquels sont enroulés des tuyaux flexibles respectifs (11) qui raccordent chacun des opérateurs externes (4) à l'unité de distribution (8), chacun des tuyaux flexibles contenant un câble de télécommunication destiné à la liaison vocale des opérateurs externes (4) avec l'opérateur interne (10).

2. Unité mobile selon la revendication 1, comprenant, en outre, une génératrice de courant électrique située dans un compartiment approprié au sein du camion automobile ou au sein de la remorque, cette génératrice pouvant être commandée depuis l'intérieur du véhicule, quelle que soit la situation de ce dernier.

3. Unité mobile selon les revendications 1 et 2, comprenant, en outre, des accumulateurs électriques de réserve situés dans un compartiment approprié au sein du camion automobile.

4. Unité mobile selon l'une quelconque des revendications 1 à 3, comprenant, en outre, au moins deux accumulateurs électriques destinés à des utilisateurs internes et externes, un de ces accumulateurs étant disposé dans le tableau de commande pour sa propre alimentation en énergie, pour le démarrage et la coupure de l'unité de compresseur et de l'unité génératrice de courant électrique, ainsi que pour l'éclairage interne du camion automobile, l'autre étant située dans la console de télécommunication pour sa propre alimentation en énergie.

5. Unité mobile selon l'une quelconque des revendications précédentes, comprenant, en outre, une unité de réserve d'eau destinée au lavage et à la décontamination, appropriée pour laver et décontaminer les opérateurs externes revêtus de leur équipement protecteur complet et, si nécessaire, le camion automobile et sa remorque.

6. Unité mobile selon l'une quelconque des revendications précédentes, comprenant, en outre, un projecteur externe de type conventionnel situé, de préférence, sur la partie avant du camion automobile.

7. Unité mobile selon l'une quelconque des revendications précédentes, comprenant, en outre, un appareil de conditionnement d'air destiné à conditionner l'air régnant au sein du camion automobile, l'air provenant de l'extérieur par l'intermédiaire de filtres absolus appropriés.

8. Unité mobile selon l'une quelconque des revendications précédentes, comprenant, en outre, un appareil respiratoire autonome de réserve.

9. Unité mobile selon l'une quelconque des revendications précédentes, comprenant, en outre, un équipement de radio destiné à la liaison avec un poste de commande.

10. Unité mobile selon l'une quelconque des revendications précédentes, comprenant, en outre, un système de télévision à circuit fermé équipé d'un vidéo-enregistreur sur film, mis en oeuvre par l'intermédiaire de caméras de télévision faisant partie de l'équipement des opérateurs externes, qui permet une visualisation de l'environnement où a lieu l'intervention, même en l'absence de lumière, à l'aide des images qui arrivent à un écran de réception associé à un vidéo-enregistreur sur film.

11. Unité mobile selon l'une quelconque des revendications précédentes, comprenant, en outre, des instruments destinés à effectuer des contrôles radiométriques directs, ainsi que des dispositifs destinés à prélever des échantillons de différentes espèces afin d'effectuer des évaluations à court terme.

FIG.1

FIG.2

FIG.3

FIG.4